# EUROPEAN PATENT APPLICATION

(11) **EP 4 752 375 A1**
(43) Date of publication of application: **03.06.2026**
(21) Application number: 24825175.3
(22) Date of filing: 12.06.2024
(51) Int. Cl.: F04D 25/08, F04D 29/00, F04D 29/64, F04D 29/52, F04D 29/54, F04D 27/00

(54) **PORTABLE FAN**

(30) Priority: 19.06.2023 CN 202321578720 U
(71) Applicant: Shenzhen Jisu Technology Co., Ltd, Shenzhen, Guangdong 518129 (CN)
(72) Inventor: ZHENG, Guanzheng, Shenzhen, Guangdong 518129 (CN); YE, Cheng, Shenzhen, Guangdong 518129 (CN); YANG, Yinggai, Shenzhen, Guangdong 518129 (CN); GAO, Haijun, Shenzhen, Guangdong 518129 (CN); XIE, Jiahang, Shenzhen, Guangdong 518129 (CN); QI, Wenpeng, Shenzhen, Guangdong 518129 (CN)
(74) Representative: Herrero & Asociados, S.L.
(86) International application number: PCT/CN2024/098734
(87) International publication number: WO 2024/260279

(57) **Abstract**

A portable fan, comprising an air supply portion (100). The air supply portion (100) comprises a housing (1) provided with an accommodating chamber, an air supply assembly (2) arranged in the accommodating chamber of the housing (1), a display screen (3) arranged at the front end of the housing (1), an air outlet arranged along the periphery of the display screen (3), and an air inlet arranged at the rear end of the housing (1); and the display screen (3) is used for displaying a working state. By means of the display screen, a user can visually know the working state of the portable fan in time, the intelligent degree of the portable fan is improved, and user experience is enhanced.

## Description

### CROSS REFERENCE TO RELATED APPLICATIONS

The present application claims the priority of the Chinese patent application No. 202321578720.7, filed on June 19, 2023 to the China National Intellectual Property Administration, in the title of "PORTABLE FAN", contents of which are incorporated herein by its entireties.

### TECHNICAL FIELD

Embodiments of the present disclosure relate to the technical field of fans, and more specifically, to a portable fan.

### BACKGROUND

For a portable fan in the art, an operating status of the portion fan may not be displayed in real time, and therefore, an intelligence level of the portable fan may be reduced. A user may not promptly and intuitively understand the operating status of the portable fan, reducing the user experience.

### SUMMARY

In order to solve the above technical problem, the present disclosure provides a portable fan that may digitally display the operating status of the portable fan.

The present disclosure may provide a portable fan, including: a handheld portion; a housing, connected to the handheld portion and having an air inlet and an air outlet opposite to the air inlet; a display screen, arranged on the fan housing or the handheld portion and configured to display a currently airflow speed level and an adjustable airflow speed interval, where the portable fan is preset with a plurality of airflow speed levels, for forming the adjustable airflow speed interval; and an airflow speed regulator, configured to receive a control instruction that is in a continuous state or has a changing trend and configured to selectively perform, through the control instruction, a continuous adjustment or an adjustment in a skip-level manner on the current airflow speed level within the adjustable airflow speed interval formed by the plurality of airflow speed levels. For the continuous adjustment, an adjustment magnitude in which the current airflow speed level is adjusted is one level; and for the adjustment in the skip-level manner, the adjustment magnitude in which the current airflow speed level is adjusted is greater than or equal to two levels.

Beneficial effects of the present disclosure may at least include the following.

According to the portable fan of the present disclosure, by arranging the display screen for displaying the operating status, the user may promptly and intuitively understand the operating status of the portable fan, enhancing the intelligence level of the portable fan and improving the user experience.

### BRIEF DESCRIPTION OF THE DRAWINGS

FIG. 1 is a structural schematic view of an airflow portion according to an embodiment I of the present disclosure.
FIG. 2 is an exploded view of the airflow portion shown in FIG. 1.
FIG. 3 is a cross-sectional view of the airflow portion according to the embodiment I of the present disclosure.
FIG. 4 is a schematic view of a display screen.
FIG. 5 is a schematic view of an inner shell that is assembled.
FIG. 6 is a structural schematic view of a portable fan according to an embodiment II of the present disclosure.
FIG. 7 is a cross-sectional view of the portable fan according to the embodiment II of the present disclosure.

Reference numerals in the drawings: 100 - airflow portion, 1 - housing, 11 - inner shell, 111 - first inner shell, 112 - second inner shell, 113 - second snap block, 114 is the second snap hook, 115 - cover, 116 - fixation ring, 117 - third snap hook, 118 - third snap block, 12 - outer shell, 13 - second connecting member, 14 - first fastening member, 15 - second connecting plate, 16 - second fastening member, 2 - airflow assembly, 21 - drive motor, 211 - rotation shaft, 22 - fan rotor, 23 - blades, 24 - rotation bearing, 3 - display screen, 31 - first snap hook, 4 - connecting base, 41 - reinforcing rib, 42 - first snap block, 5 - rear cover, 51 - opening portion, 200 - handheld portion, 6 - handle, 61 - first connecting member, 62 - first connecting plate, 7 - airflow speed regulator, 8 - charging port, 9 - switch button.

### DETAILED DESCRIPTIONS

In order to facilitate understanding the present disclosure, the present disclosure will be described comprehensively below by referring to the accompanying drawings. The drawings show preferred embodiments of the present disclosure. However, the present disclosure may be implemented in various forms and may not be limited to the embodiments described herein. On the contrary, the purpose of providing the embodiments is to enable the present disclosure to be understood more thoroughly and comprehensively.

It should be noted that when an element is considered to be "connected" to another element, the element may be directly connected to the other element, or an intermediate element may be present therebetween.

In the present disclosure, terms such as "first", "second", and so on, may be used for descriptive purposes only and shall not be interpreted as indicating or implying relative importance or implicitly specifying the quantity of the indicated technical features.

In the present disclosure, terms indicating an orientation or positional relationship, such as "front", "rear", "top", "inner", "outer", and so on, are based on an orientation or positional relationship shown in the drawings. Ther terms may be used merely to facilitate description of the present disclosure and simplify the description, but may not indicate or imply that a device or an element referred to must have a specific orientation or must be constructed and operated in a specific orientation. Therefore, the terms may not be used to limit the present disclosure.

### Embodiment I

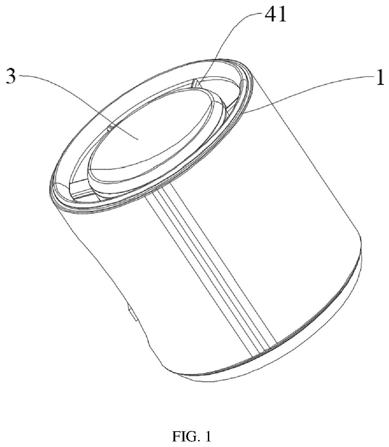

A portable fan may include an airflow portion 100. As shown in FIGS. 1 to 3, the airflow portion 100 may include a housing 1 having an accommodating cavity, an airflow assembly 2 received in the accommodating cavity of the housing 1, a display screen 3 disposed at a front end of the housing 1, an air outlet arranged along an outer circumference of the display screen 3, and an air inlet disposed at a rear end of the housing 1. The display screen 3 may be configured to display an operating status. It should be noted that in the embodiments of the present application, the "front end" may refer to an end in a direction towards a user when the portable fan is in use, and the "rear end" may refer to an end in a direction away from the user when the portable fan is in use. The term "in" may refer to a direction towards a central axis of the housing 1, and "outer" may refer to a direction away from the central axis of the housing 1. "Top" may refer to a direction extending from a handheld portion 200 towards the airflow portion 100. When the portable fan is in use, the display screen 3 may display a remaining battery level, a current airflow speed, and a charging level when charging.

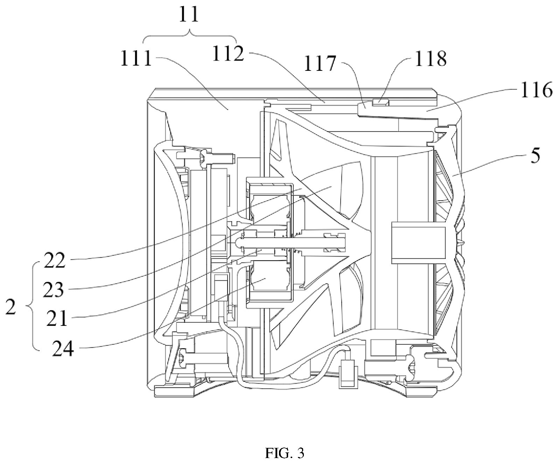

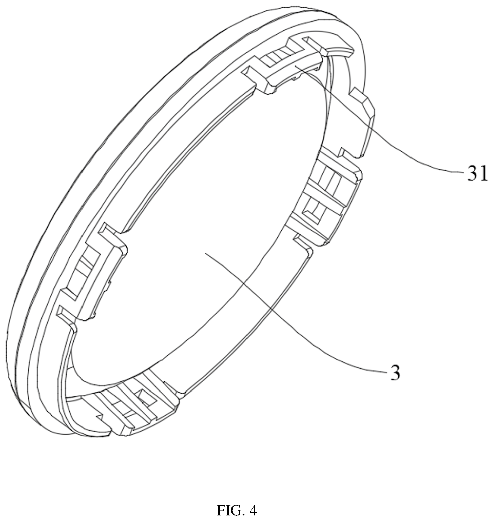

As shown in FIG. 4, the display screen 3 may be disposed correspondingly to correspond to a central axis region of the accommodating cavity. At least part of the display screen 3 may be a curved surface recessed from the front end towards the rear end of the housing 1. In some embodiments, the display screen 3 may be recessed from the central axis along the axial direction towards the rear end of the housing 1, such that a front side surface of the display screen 3 may be concaved. The front side surface of the display screen 3 may be a concave surface, recessed towards the rear end of the housing 1, such that an airflow flowing out of the air outlet may be concentrated at a region corresponding to the display screen 3, the airflow blown out of the portable fan may be more concentrated, improving an airflow outputting effect, enhancing the usage experience, saving energy, and increasing a battery life of the portable fan. As shown in FIG. 3, in some embodiments, a plane, which is formed by an edge of the display screen 3, may lower than a plane, which is formed by a front edge of the housing 1, and that is, the plane formed by the display screen 3 may be disposed closer to the air inlet than the plane formed by the front edge of the housing 1. In this way, the display screen 3 may be disposed inside the accommodating cavity of the housing 1, such that the display screen 3 may be protected from being worn or damaged due to any force.

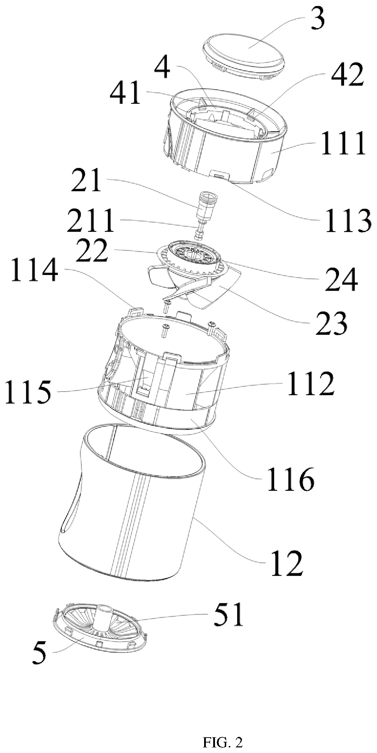

As shown in FIGS. 2 to 5, the housing 1 may include an inner shell 11 and an outer shell 12 sleeving an outside of the inner shell 11. The inner shell 11 may include a first inner shell 111 and a second inner shell 112 that are sequentially arranged from the front end to the rear end. A connecting base 4 for mounting the display screen 3 may be arranged at a region of the accommodating cavity corresponding to a rear side of the display screen 3. A plurality of reinforcing ribs 41 may be arranged between an outer periphery of the connecting base 4 and an inner wall of the first inner shell 111. The plurality of reinforcing ribs 41 may be uniformly distributed along the outer periphery of the connecting base 4 and may the air outlet into a plurality of air sub-outlets that may be uniformly distributed along the outer circumference of the display screen 3. In some embodiments, a radial cross section of each of the plurality of air sub-outlets along a radial direction of the housing 1 may be trapezoidal arc-shaped. By arranging the plurality of reinforcing ribs 41, the connecting base 4 may be connected to the inner wall of the first inner shell 111, and a supporting force may be provided for the first inner shell 111, enhancing structural strength of the first inner shell 111. Mating connection structures may be respectively arranged on an outer wall of the inner shell 11 and an inner wall of the outer shell 12. In some embodiments, the mating connection structures may include: a connection groove that is arranged on the outer wall of the inner shell 11 along an axial direction of the outer wall; and a connection protrusion that is arranged on the inner wall of the outer shell 12 and is mated with the connection groove. Mating between the connection groove and the connection protrusion may guide the connection between the inner shell 11 and the outer shell 12 and may prevent relative rotation between the inner shell 11 and the outer shell 12, such that stability of the connection between the inner shell 11 and the outer shell 12 may be improved.

The display screen 3 and the connecting base 4 may be connected to each other via a first snap-fit assembly. The first snap-fit assembly may include: a plurality of first snap hooks 31 that may be arranged on the rear side of the display screen 3 and may be distributed along a circumference direction of the display screen 3; and a plurality of first snap blocks 42 that may be arranged at a front end of the connecting base and may be engaged with the plurality of first snap hooks 31. Further, each of the plurality of first snap hooks may extend from the rear side of the display screen towards the air inlet. An outer side of a rear end of the first snap hook 31 may be arranged with an inclined surface. By arranging the inclined surface, a resistance during engaging the first snap hook 31 with the first snap block 42 may be reduced, assembling difficulty may be reduced, a mounting efficiency may be improved, a cushioning effect may be provided, any damage to a corner when the first snap hook 31 and the first snap block 42 are connected to each other may be avoided, and demolding during manufacturing the first snap hook 31 may be easily performed. In some embodiments, the first snap-fit assembly may include: the plurality of first snap blocks 42 arranged at the rear side of the display screen 3; and the plurality of first snap hooks 31 that are arranged on the front end of the connecting base and engaged with the plurality of first snap blocks 42.

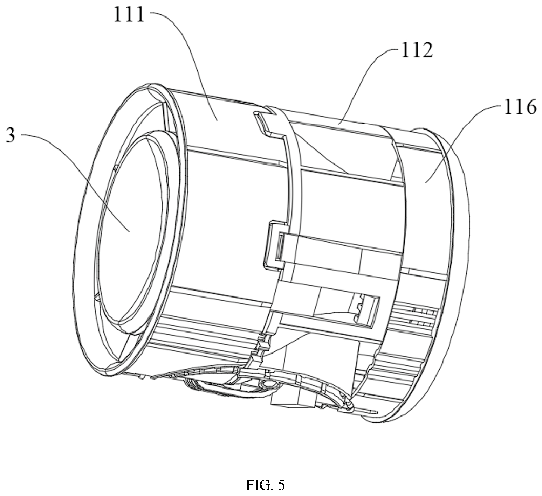

As shown in FIG. 5, a second snap-fit assembly may be arranged at a connection region between the first inner shell 111 and the second inner shell 112. The second snap-fit assembly may include a second snap block 113 arranged at a rear end of the first inner shell 111 and a second snap hook 114 that is arranged on a front end of the second inner shell 112 and is engaged with the second snap block 113. In some embodiments, a position at which the second snap block 113 is arranged and a position at which the second snap hook 114 is arranged may be interchangeable with each other. For example, in some embodiments, the second snap hook 114 may be arranged at the rear end of the first inner shell 111, and the second snap block 113 may be arranged on the front end of the second inner shell 112.

As shown in FIGS. 2 and 3, the airflow assembly 2 may include a drive motor 21 arranged along the central axis of the accommodating cavity, a fan rotor 22 mounted on a rotation shaft 211 of the drive motor 21, and fan blades 23 disposed on an outer wall of the fan rotor 22. The fan rotor 22 may be a hollow frustum in shape. An end of the fan rotor 22 having a larger inner diameter may be disposed near the air outlet. The fan blades 23 may be spiral streamlined in shape, reducing a resistance against the airflow when flowing from the air inlet to the air outlet, further ensuring the airflow outputting effect of the portable fan. At least part of the fan rotor 22 may extend to the drive motor 21, and a rotation bearing 24, which is connected to an inner wall of the fan rotor 22, may be sleeved on a region of the drive motor 21 corresponding to the fan rotor 22. In some embodiments, the fan rotor 22 may be connected to the rotation shaft 211 of the drive motor 21 via an adapter. The fan rotor 22 and the fan blades 23 may be integrally formed as a one-piece structure. According to the arrangement of the drive motor 21 and the fan rotor 22, a space occupied by the airflow portion 100 may be reduced. The arrangement of the rotation bearing 24 may ensure rotational stability of the fan rotor 22. In this way, overall operational stability of the portable fan may be ensured.

A region of the second inner shell 112 corresponding to the fan blades 23 may be arranged with a cover 115 that covers the fan blades 23. A rear end of the cover 115 may be communicated with the air inlet, and an inner diameter of the cover 115 may gradually decrease in a direction from a front end to the rear end of the cover 115. A rear cover 5 may be arranged at the air inlet, and the rear cover 5 may be arranged with an opening portion 51 allowing air to enter the accommodating cavity. Since the cover 115 is communicated with the air inlet, the airflow, after entering from the air inlet, may flow directly towards the fan blades 23 and the fan rotor 22 under guidance of the cover 115. The fan rotor 22 may drive the fan blades 23 to rotate, so as to form a vortex air duct. The air duct formed by the cover 115, the fan blades 23, and the fan rotor 22 cooperatively may improve an airflow guiding effect and the airflow outputting effect. In some embodiments, the rear cover 5 may be arranged with a plurality of connecting strips that are radially extending from the central axis to an edge region of the rear cover. Gaps between every adjacent two of the plurality of connecting strips may form the opening portion 51. Further, in some embodiments, the plurality of connecting strips may be arc, protruding towards the rear end, such that a resistance against the airflow may be reduced, and an air intaking effect may be ensured. In some embodiments, the rear cover 5 may define a plurality of round, square, or any other shaped holes to form the opening portion 51.

Further, as shown in FIGS. 2, 3, and 5, the rear cover 5 and the second inner shell 112 may be connected to each other via a fixation ring 116. The rear cover 5 may be snap-fitted to a rear end of the fixation ring 116. A front end of the fixation ring 116 may be connected to a rear end of the second inner shell 112 via a third snap-fit assembly. The third snap-fit assembly may include: a third snap hook 117 arranged on the front end of the fixation ring 116; and a third snap block 118 that is arranged on the rear end of the second inner shell 112 and is engaged with the third snap hook 117. As shown in FIG. 3, an outer wall of the third snap hook 117 may be arranged with an inclined surface to facilitate snap-fit connection between the third snap hook 117 and the third snap block 118, such that a mounting efficiency may be increased. In some embodiments, the third snap-fit assembly may include: the third snap block 118 arranged on the front end of the fixation ring 116; and the third snap hook 117 that is arranged on the rear end of the second inner shell 112 and is engaged with the third snap block 118.

The portable fan may further include a power supply electrically connected to the display screen 3 and the drive motor 21.

### Embodiment II

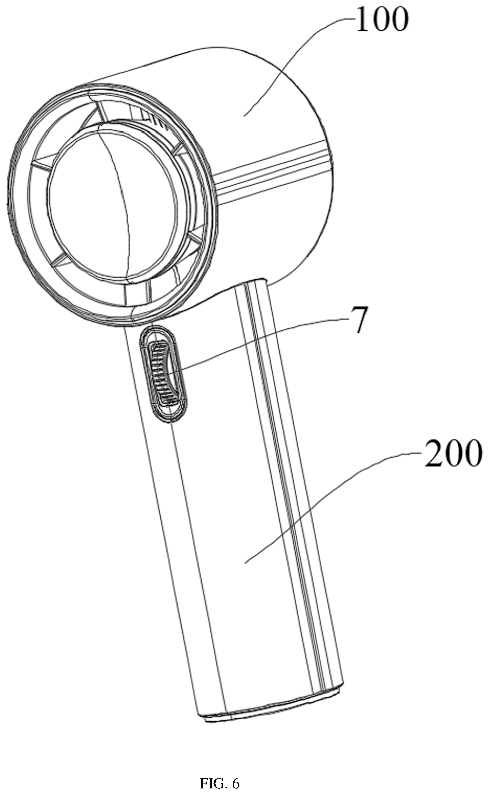

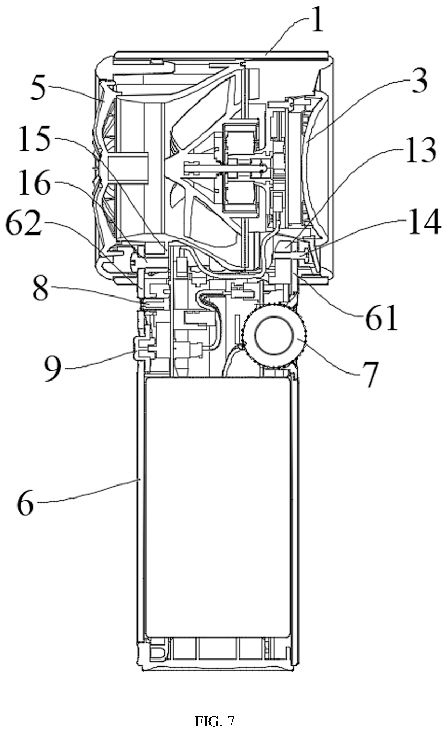

The present embodiment may provide a portable fan including the airflow portion 100 described in the embodiment I. As shown in FIGS. 6 and 7, the portable fan may further include a handheld portion 200 connected to the airflow portion 100. The handheld portion 200 may include a handle 6, an airflow speed regulator 7 arranged on the handle 6, a charging port 8 arranged on the handle 6, and a switch button 9 arranged on the handle 6. The power supply may be received inside the handle 6. The handle 6 may define a mounting groove for mounting the power supply. The airflow speed regulator 7, the charging port 8, and the switch button 9 may be electrically connected to the power supply. The power supply may be charged through the charging port 8. The switch button 9 may be configured to control connection of the power supply with the drive motor 21, the display screen 3, and the airflow speed regulator 7. The airflow speed regulator 7 may be electrically connected to the drive motor 21 to control an output power of the drive motor 21. While in use, by rotating the airflow speed regulator 7, the output power of the drive motor 21 may be adjusted. The fan rotor 22 may be driven by the drive motor 21 to further drive the fan blades 23 to rotate at various speeds, so as to drive the airflow to flow from the air inlet to the air outlet at various flow rates, such that the airflow speed may be controlled, customized requirements of the user under various circumstances may be met, and the usage experience may be improved. In some embodiments, as shown in FIG. 7, the airflow speed regulator 7 may be disposed on a side of the handle 6 facing the user, enabling the user to perform operations conveniently. The charging port 8 and the switch button 9 may be disposed on a side of the handle 6 facing away from the user. In some embodiments, a dustproof cover may be provided on the charging port to prevent dust, water, and so on, from entering the charging port.

As shown in FIG. 7, a top of the handle 6 may extend into the housing 1 of the airflow portion 100. Specifically, the top of the handle 6 may include a first connecting member 61 extending into the housing 1 corresponding to the air outlet. A second connecting member 13 corresponding to the first connecting member 61 may be arranged at the air outlet. The first connecting member 61 and the second connecting member 13 may be connected to each other via a first fastening member 14. In some embodiments, in order to further enhance stability of the connection between the handheld portion 200 and the airflow portion 100, the handle 6 may further include a first connecting plate 62 extending into the housing 1 corresponding to the air inlet. A second connecting plate 15 corresponding to the first connecting plate 62 may be arranged at the air inlet. The first connecting plate 62 and the second connecting plate 15 may be connected to each other via a second fastening member 16. The first connecting plate 62 and the first connecting member 61 may be arranged opposite to each other.

When the portable fan is in use, the switch button 9 may be turned on, the display screen 3 may light up and display the operating status of the portable fan. The airflow speed regulator 7 may be rotated to adjust the airflow outputting speed.

In the present embodiment, the display screen of the portable fan may not be limited to being disposed on the housing 1. In some embodiments, the portable fan may be arranged on the handheld portion.

In the present embodiment, the drive motor 21 may be a three-phase motor. A rotation speed of the three-phase motor may be adjusted within a relatively large range. For example, the rotation speed of the three-phase motor may be adjusted within a range of 4000-20000 r/min. The above example may be provided to illustrate the range in which the rotation speed of the three-phase motor may be adjusted and may not limit the rotation speed of the drive motor 21 of the present embodiment. Depending on specific application scenarios, the rotation speed of the three-phase motor, that can be adjusted within a larger or smaller range, may be applied for each scenario. Therefore, during operation, the range in which the rotation speed of the three-phase motor can be adjusted may be significantly wide. In accordance with the significantly wide range, a corresponding range in which an airflow speed level of the portable fan can be adjusted may also be significantly large. For example, in some embodiments, an airflow speed level may be adjusted in a range of a level 1 to a level 100 or in a range of a level 0 to a level 100. During adjusting the airflow speed level within such a wide range, it may be inconvenient to perform the adjustment by performing traditional click control. Furthermore, by performing traditional click control, an adjustment button for controlling the airflow speed may be excessively used, shortening a service life thereof. Therefore, in order to address the above situation, a method for quickly adjusting the airflow speed or a portable fan capable of quickly adjusting the airflow speed may be provided herein.

A portable fan may include the following.

The handheld portion may be arranged.

The housing 1 may be connected to the handheld portion and may define the air inlet and the air outlet respectively on opposite sides of the housing 1.

The display screen may be arranged on the housing 1 of the portable fan or on the handheld portion 200. The display screen may have a wide airflow speed displaying range to display the airflow speed level that may vary over a wide range.

The airflow speed regulator 7 may be configured to receive a continuous-state control instruction or a control instruction carrying a changing trend, and may adjust, based on the control instruction, the airflow speed level displayed in the display screen continuously or adjust the airflow speed level in a skip-level manner. In this way, the airflow speed level of the portable fan may be adjusted quickly.

In the present embodiment, the airflow speed level may be adjusted within a range of a level 1 to a level 10000. In some embodiments, the airflow speed levels may be adjusted within a range of a level 1 to a level 6, or within a range of a level 1 to a level 10, or within a range of a level 1 to a level 20, or within a range of a level 1 to a level 50, or within a range of a level 1 to a level 100, or within a range of a level 1 to a level 200, such that the high-speed three-phase motor may be precisely controlled, facilitating the user to fully experience and choose an airflow power and noise according to demands of the user. For example, an airflow speed range of 4000 to 20000 r/min may be linearly divided into 100 levels. Each of the 100 level may corresponds to a unique airflow speed. Of course, in other embodiments, airflow speed range of 4000 to 20000 r/min may be divided into 100 levels in a gradient manner. However, the above adjustable airflow speed range and the corresponding manners for dividing the airflow speed range into various levels may not limit the adjustable airflow speed level range and level division in the present embodiment. According to specific application scenarios, the user may adaptively customize a maximum value of each adjustable airflow speed level range and the number of levels.

The airflow speed regulator 7 in the present embodiment may be: an airflow speed adjustment knob, an airflow speed adjustment button, a touch control button, an airflow speed adjustment roller, or any other control structure.

When the airflow speed regulator 7 is the airflow speed adjustment knob, the user may send a continuous-state control instruction by rotating the airflow speed adjustment knob. When the user continuously rotates the airflow speed adjustment knob, the airflow speed level may be quickly adjusted. Specifically, when the user continuously rotates the airflow speed adjustment knob, the airflow speed level may change quickly and continuously within a variable range, or the airflow speed level may change within a variable range in the skip-level manner. The skip-level manner may refer to a change in the airflow speed level being greater than or equal to two levels. In some embodiments, as the user continuously rotates the airflow speed adjustment knob more quickly, a magnitude in which the airflow speed level changes may be greater.

When the airflow speed regulator 7 is the airflow speed adjustment button, the user may send a continuous-state control instruction by performing a long-press. Specifically, the user may long-press the button to increase or decrease the airflow speed, the airflow speed level may change quickly and continuously within the variable range, or the airflow speed level may change within the variable range in the level-skip manner. The skip-level manner may refer to the change in the airflow speed level being greater than or equal to two levels. In some embodiments, as time during which the airflow speed adjustment button is long-pressed is longer, the magnitude in which the airflow speed level changes may be greater.

When the airflow speed regulator 7 is the touch control button, a manner of adjusting the airflow speed may be the same as that for the airflow speed adjustment button, which will not be repeated here. When the airflow speed regulator 7 is a touch control button having a sliding function, the user may perform sliding within a region of the touch control button to quickly adjust the airflow speed level. Specifically, when a finger of the user or a stylus or any other external touch control element performs a continuous sliding operation along one direction on the touch control button, the airflow speed level may change quickly and continuously within the variable range, or may change within the variable range in the skip-level manner. The skip-level manner may refer to the change in the airflow speed level being greater than or equal to two levels. In some embodiments, as a sliding speed of the sliding operation performed on the touch control button is faster, the magnitude in which the airflow speed level changes may be greater. In some embodiments, the user may achieve adjustment having a changing trend on the airflow speed level through the touch control button with the sliding function. For example, when the finger or the stylus or any other external touch control element quickly performs the sliding operation quickly on the touch control button and then leaves the touch control button, a touch contact may be interrupted, and the airflow speed level may continue changing until the change in the airflow speed level completely consumes the trend of the sliding operation, or the airflow speed level may continue changing and then stop changing until the airflow speed level reaches a maximum range value or a minimum range value. The above control manner may be defined as the control instruction carrying the changing trend.

When the airflow speed regulator 7 is the airflow speed adjustment roller, the user may send the continuous-state control instruction by rolling the airflow speed adjustment roller. When the user continuously rolls the airflow speed adjustment roller, the airflow speed level may be quickly adjusted. Specifically, when the user continuously rolls the airflow speed adjustment roller, the airflow speed level may change quickly and continuously within the variable range, or may change the variable range in the skip-level manner. The skip-level manner may refer to the change in the airflow speed level being greater than or equal to two levels. In some embodiments, as a rolling speed of the airflow speed adjustment roller is faster, the magnitude in which the airflow speed level changes may be greater.

In the present embodiment, the airflow speed regulator 7 enables the airflow speed level of the portable fan to be quickly adjusted over the wide range, facilitating the user to use the portable fan conveniently. In addition, the airflow speed regulator 7 may not be used frequently, such that component fatigue and damage caused by frequent usage may be avoided, and the service life of the portable fan may be extended.

In some embodiments, the airflow speed regulator 7 may further be configured to turn on or off the portable fan. For example, when the portable fan is in a stopped state, the portable fan may be started operating by performing clicking, sliding, rotating, or rolling, and so on. The portable fan may then be turned off by long-pressing or clicking the airflow speed regulator 7.

In some embodiments, when the airflow speed regulator 7 is the airflow speed adjustment knob or the airflow speed adjustment roller, in addition to controlling the airflow speed level by rotation, the airflow speed adjustment knob or the airflow speed adjustment roller may be long-pressed so as to adjust the airflow speed level in the skip-level manner. For example, by clicking the airflow speed adjustment knob or the airflow speed adjustment roller, the airflow speed level may change quickly and continuously within the variable range, or may change within the variable range in the skip-level manner. The skip-level manner may refer to the change in the airflow speed level being greater than or equal to two levels.

In some embodiments, in order to allow the user to turn on or off the portable fan more quickly, the switch button 9 may be arranged to turn on or off the portable fan. Regardless of the portable fan being running at any airflow speed level, the portable fan may be turned off through the switch button 9.

It is understandable that in another embodiment, the portable fan may include only the airflow portion. The airflow portion may be connected to any other portable part. For example, when the portable fan is a neck fan, the portable fan may include a curved neck-wearing portion connected to the airflow portion.

In some embodiments, a rotation speed per unit time carried in the continuous-state control instruction received by the airflow speed regulator 7 may be positively correlated to a level magnitude in which the airflow speed level is adjusted based on the control instruction. For example, when the number of pulses generated by the control instruction obtained by the airflow speed regulator 7 per unit time is less than a set threshold, the airflow speed regulator 7 may adjust the airflow speed level by a magnitude value of 1 for each pulse corresponding to the received control instruction. That is, for each pulse waveform generated by the user controlling the airflow speed regulator 7, the airflow speed level of the portable fan may be adjusted by one level. When the number of pulses generated by the control instruction obtained by the airflow speed regulator 7 per unit time is greater than or equal to the set threshold, the airflow speed regulator 7 may adjust the airflow speed level by a magnitude value of 5 for each pulse corresponding to the received control instruction. That is, for each pulse waveform generated by the user controlling the airflow speed regulator 7, the airflow speed level of the portable fan may be adjusted by 5 levels.

In some embodiments, a plurality of progressive quantity thresholds may be defined. Each quantity threshold may correspond to a unique magnitude value in which the airflow speed level is adjusted. When the control instruction is received, the number of pulses received per unit time may be calculated and matched to a plurality of threshold intervals formed by the quantity thresholds. The corresponding magnitude value in which the airflow speed level is adjusted may be determined based on the threshold interval in which the number of pulses falls. The airflow speed level may be adjusted in the skip-level manner based on the determined magnitude value in which the airflow speed level is adjusted.

For example, in some embodiments, the unit time may be 100ms, and the number of pulse changes within the 100ms may be calculated, the numerical change may correspond to the rotation speed. When the number of pulse changes within the 100ms is less than 9 sets, the change in the airflow speed carried in the control instruction may be determined as "slow change", and the magnitude value in which the airflow speed level is adjusted may be set to 1. When the number of pulse changes within the 100ms is greater than 9 sets, the change in the airflow speed carried in the control instruction may be determined as "fast change", and the magnitude value in which the airflow speed level is adjusted may be set to 5.

In some embodiments, the unit time may be 300ms. When only one set of pulses within the 300ms, the magnitude value in which the airflow speed level is adjusted may be to 1, and no amplification may be performed. When 2-4 sets of pulses are detected within the 300ms, the magnitude value in which the airflow speed level is adjusted may be amplified by 3 times, and the magnitude value in which the airflow speed level is adjusted may be set to 3. When the number of pulse sets received within the 300ms is greater than 4, the magnitude value in which the airflow speed level is adjusted may be amplified by 10 times, and the magnitude value in which the airflow speed level is adjusted may be set to 10.

A time length of the unit time in the present embodiment is not limited to the given examples. Depending on specific application scenarios, the user may customize the time length of the unit time to meet demands of the scenario. Correspondingly, the quantity threshold used to determine an action speed performed by the user within the unit time may not be limited to the values in the above examples. The user may customarily set the quantity threshold or the numerical intervals formed by the quantity thresholds during practice, and may simultaneously define the magnitude value, in which the airflow speed level is adjusted, mapped to each quantity threshold or each numerical interval.

By arranging the speed applied to the airflow speed regulator 7 to be positively correlated to the magnitude value in which the airflow speed level is adjusted, the user may quickly adjust the airflow speed level across the wide range, the user may use the portable fan more conveniently, and the airflow speed regulator 7 may not be frequently rotated for usage, extending the service life of the airflow speed regulator 7.

In some embodiments, when the airflow speed regulator 7 is the airflow speed adjustment button or the touch control button, the time length of the continuous-state control instruction acting on the airflow speed regulator 7 may be positively correlated to the magnitude value, in which the airflow speed level is adjusted, based on the control instruction. For example, when the time length for which the user performs an action on the airflow speed regulator 7 is in a range of 0 to 0.5s, the magnitude value, in which the airflow speed level is adjusted, may be 1. When the time length for which the user performs an action on the airflow speed regulator 7 is in a range of 0.5 to 1s, the magnitude value, in which the airflow speed level is adjusted, may be 3. When the time length for which the user performs an action on the airflow speed regulator 7 is in a range of 1 to 2s, the magnitude value, in which the airflow speed level is adjusted, may be 5. When the time length for which the user performs an action on the airflow speed regulator 7 is longer than 2s, the magnitude value, in which the airflow speed level is adjusted, may be 10. The time length for which the user performs the action on the airflow speed regulator 7 and the corresponding magnitude value, in which the airflow speed level is adjusted, may not be limited to the above examples. The time length for which the user performs the action on the airflow speed regulator 7 and the corresponding magnitude value, in which the airflow speed level is adjusted, may be set according to actual demands. By arranging the time length for which the user continuously performs the action on the airflow speed regulator 7 to be positively correlated to the corresponding magnitude value, in which the airflow speed level is adjusted, the user may quickly adjust the airflow speed level across the wide range. The user may use the portable fan conveniently, and the airflow speed regulator 7 may not be frequently rotated for usage, extending the service life of the airflow speed regulator 7.

Technical features of the above embodiments may be combined with each other arbitrarily. For brevity, not all possible combinations of the various technical features in the above embodiments are described. However, as long as no contradiction is caused in the combination of these technical features, the combination shall be considered as being within the scope of the present disclosure.

The above embodiments only represent preferred embodiments of the present disclosure. The description may be specific and detailed, but shall not be interpreted as limiting the scope of the present disclosure. It should be noted that, any ordinary skilled artisan in the art may perform modifications and improvements without departing from the concept of the present disclosure, and the modifications and improvements shall be within the scope of the present disclosure. Therefore, the scope of the present disclosure shall be subject to the appended claims.

## Claims

1. A portable fan, comprising: an airflow portion (100); wherein the airflow portion (100) comprises a housing (1) defining an accommodating cavity, an airflow assembly (2) received in the accommodating cavity of the housing (1), a display screen (3) disposed at a front end of the housing (1), an air outlet surrounding a periphery of the display screen (3), and an air inlet disposed at a rear end of the housing (1); wherein the display screen (3) is configured to display an operating status.

2. The portable fan according to claim 1, wherein, the display screen (3) is disposed at a region corresponding to a central axis of the accommodating cavity, and at least part of the display screen (3) is recessed from the front end of the housing (1) toward the rear end of the housing (1).

3. The portable fan according to claim 1, wherein, the housing (1) comprises an inner shell (11) and an outer shell (12) sleeving an outside of the inner shell (11), the inner shell (11) comprising a first inner shell (111) and a second inner shell (112) that are arranged sequentially from front to rear; a connecting base (4) for mounting the display screen (3) is arranged at a region of the accommodating cavity corresponding to a rear side of the display screen (3); a plurality of reinforcing ribs (41) are arranged between an outer periphery of the connecting base (4) and an inner wall of the first inner shell (111); the plurality of reinforcing ribs (41) are evenly distributed along the outer periphery of the connecting base (4) and divide the air outlet into a plurality of air sub-outlets that are evenly distributed around the periphery of the display screen (3).

4. The portable fan according to claim 3, wherein, the display screen (3) and the connecting base (4) are connected to each other via a first snap-fit assembly; the first snap-fit assembly comprises: first snap hooks (31) and first snap blocks (42); the first snap hooks (31) are circumferentially arranged at the rear side of the display screen (3); the first snap blocks (42) are arranged at a front end of the connecting base (4) and mated with the first snap hooks (31); the first snap hooks (31) extend from the rear side of the display screen (3) toward the air inlet, and an outer side of a rear end of each of the first snap hooks (31) is arranged with an inclined surface.

5. The portable fan according to claim 3, wherein, a second snap-fit assembly is arranged at a connection region where the first inner shell (111) and the second inner shell (112) are connected to each other; the second snap-fit assembly comprises second snap blocks (113) and second snap hooks (114); the second snap blocks (113) are arranged at the rear end of the first inner shell (111), the second snap hooks (114) are arranged at a front end of the second inner shell (112) and mated with the second snap blocks (113).

6. The portable fan according to claim 3, wherein, the airflow assembly (2) comprises a drive motor (21) disposed along a central axis of the accommodating cavity, a fan rotor (22) arranged on a rotating shaft (211) of the drive motor (21), and fan blades (23) arranged on an outer wall of the fan rotor (22); the fan rotor (22) is a hollow truncated cone in shape; an end of the fan rotor (22), having a larger inner diameter, faces the air outlet; the fan blades (23) are in a spiral streamlined shape; at least part of the fan rotor (22) extends toward the drive motor (21), and a rotation bearing (24) connected to an inner wall of the fan rotor (22) is sleeved on a region of the drive motor (21) corresponding to the fan rotor (22).

7. The portable fan according to claim 6, wherein, a cover (115) covering the fan blades (23) is arranged on a region of the second inner shell (112) corresponding to the fan blades (23); a rear end of the cover (115) is fluidly communicated with the air inlet; and an inner diameter of the cover (115) gradually decreases from front to rear; a rear cover (5) is arranged at the air inlet, the rear cover (5) is arranged with an opening portion (51) for allowing airflow to enter the accommodating cavity.

8. The portable fan according to claim 7, wherein, the rear cover (5) is connected to the second inner shell (112) via a fixation ring (116), the rear cover (5) is snap-fitted to a rear end of the fixation ring (116), a front end of the fixation ring (116) is connected to a rear end of the second inner shell (112) via a third snap-fit assembly, the third snap-fit assembly comprises third snap hooks (117) and third snap blocks (118); the third snap hooks (117) are arranged at the front end of the fixation ring (116), and the third snap block (118) are arranged at the rear end of the second inner shell (112) and mated with the third snap hooks (117).

9. The portable fan according to claim 6, wherein, the portable fan further comprises a power supply, the power supply is electrically connected to the display screen (3) and the drive motor (21).

10. The portable fan according to claim 9, wherein, the portable fan further comprises a handheld portion (200) connected to the airflow portion (100); the handheld portion (200) comprises a handle (6), an airflow speed regulator (7), a charging port (8), and a power switch (9) arranged on the handle (6); the power supply is arranged inside the handle (6), and the handle (6) defines a mounting groove for mounting the power supply.
